# EUROPEAN PATENT APPLICATION

(11) **EP 1 520 887 A2**
(43) Date of publication of application: **06.04.2005**
(21) Application number: 04023386.8
(22) Date of filing: 01.10.2004
(51) Int. Cl.: C09D 129/14, C09D 127/06, C09D 133/08, C09D 175/04, C09D 133/04, C09D 125/06, C09D 129/04, C09D 131/04, C09D 109/00, C09D 123/22, C09D 171/00, C09D 183/04, C09D 163/00, C09D 169/00, C09J 5/02

(54) **Primer composition for bonding polymer composites with urethane adhesives and sealants**

(30) Priority: 02.10.2003 US 677460
(71) Applicant: National Starch and Chemical Investment Holding Corporation, New Castle, Delaware 19720 (US)
(72) Inventor: Zhang, Yue S., Somerset, New Jersey 08873 (US); Hung, Ju-Ming, Yardley, Pennsylvania 19067 (US)
(74) Representative: Held, Stephan, Dipl.-Chem. Dr.rer.nat.

(57) **Abstract**

A solvent or water-based primer system to promote the adhesion of polyurethane adhesives and sealants such as polyurethane hot melt adhesives to polymer composite substrates such as FRP and SMC. The primer contains at least one functional polymer, and preferably at least one hydroxyl functional polymer. A method of using the primer system and an article containing the primer system are also disclosed

## Description

### FIELD OF THE INVENTION

The present invention relates to primers for use in bonding polymer compositions with adhesives and sealants, and in particular with urethane adhesive.

### BACKGROUND OF THE INVENTION

In the building and automotive industries, polymer composites have been extensively used to replace wood and metals in many capacities in which they were traditionally utilized. In the building industry polymer composites are especially useful in door and window manufacture and compare favorably to wood in that they are less expensive and have a lighter weight. In addition, polymer composites overcome the cracking, splitting, delaminating of veneers and poor insulating efficiency associated with wood. Composite materials also compare favorably to metal, such as steel and aluminum, in that the composites resist denting, rusting and do not have the cold feel associated with metal. Currently, composites such as fiber reinforced plastics (FRP) and sheet molding compound (SMC) are utilized in many building and automotive applications.

Metal and sanded wood surfaces are relatively smooth when painted. In contrast, polymer composites cannot be sanded to produce a smooth surface and thus the appearance of parts made with composites is often considered inferior to that of wood or metal parts. To overcome this issue, the resins and painting processes of composites have been optimized to improve the surface appearance of the composites. These improvements in the composite surface appearance have led to difficulties in the use of adhesives in bonding materials to the composites. The reasons for this are the surfaces increased smoothness in combination with a decreased surface energy. Thus, adhesives, have little opportunity to penetrate the surface or physically lock into surface irregularities that would improve adhesion. Consequently, to achieve good adhesion it is desirable that a primer coating be placed on the composite before the adhesive.

Accordingly, it would be beneficial to provide a primer material that would facilitate bonding between polymeric composite materials and adhesives. It would be especially advantageous for the primer material to facilitate bonding between the composite material and moisture curable polyurethane hot melt adhesives.

### SUMMARY OF THE INVENTION

The present invention discloses a solvent or water-based primer system to promote the adhesion of adhesives such as polyurethane hot melt adhesives to polymer composite substrates such as FRP and SMC. The primer preferably contains at least one hydroxyl functional polymer. A method of using the primer system and an article containing the primer system are also disclosed

### DETAILED DESCRIPTION OF THE PREFERRED EMBODIMENT

The present invention provides primer compositions that provide improved adhesion between polymer composite materials and polyurethane hot melt adhesives. The primer composition is a solvent or water-based composition containing one or more functional polymers. Typical functionality would include hydroxyl, amine, carboxyl, and multi-functional. The primer composition of the present invention has a relatively long shelf life. The primer composition preferably is not significantly discolored upon exposure to ultraviolet light. Among the polymer composite material substrates with which the primer compositions are especially useful are FRP and SMC. FRP and SMC typically comprise thermosetting resins, reinforcing fibers, fillers and additives and are commonly utilized in the building industry in entry door applications. FRP and SMC are difficult substrates to adhere to because they have complicated maps, high gloss surfaces and contain mold-releasing agents on their surfaces that lower the surface tension.

Various functional polymers may be utilized in the primer composition. Suitable polymers are those linear or branched molecules with molecular weight higher than 1000, glass transition temperatures lower than 180°C and contain hydroxyl functional groups. Among the polymers that may be utilized are polyvinyl butyral, functional polyvinyl chloride, functional acrylics, hydroxyl terminated polyurethane prepolymer, hydroxyl terminated polyester, hydroxyl functional styrene based copolymers, polyvinyl alcohol, hydroxyl functional ethylene vinyl acetate, hydroxyl functional polybutadiene, hydroxyl functional polyisobutylene, hydroxyl functional polyether, hydroxyl functional polysiloxane, hydroxyl functional polyphenyl oxide, hydroxyl functional polycarbonate and mixtures thereof. Preferably, the hydroxyl functional polymers are polyvinyl butyral, functional polyvinyl chloride or mixtures thereof.

The solvent component of the primer composition of the invention may be volatile and is less preferably a solvent that will dissolve the resin at a temperature in the range from about 0°C to about 100°C, preferably from about 10°C to about 40°C and most preferably from about 20°C to about 25°C. The solvent is preferably anhydrous. Various solvents may be utilized in the primer, including, for example, alcohols, aliphatic esters, ketones, aliphatic hydrocarbons, aromatic hydrocarbons, and halogenated aromatic or aliphatic hydrocarbons. Examples include, but are not limited to, acetone, methyl ethyl ketone, methyl isobutyl ketone, methyl amyl ketone, ethyl acetate, isopropyl acetate, ethanol, methylene chloride, chloroform, isopropyl alcohol, xylene, heptane, toluene, and mixtures thereof.

Primer compositions of the present invention may optionally contain one or more additives. Additives that may be included in the composition include pigments, optical brighteners, such as Uvtex OB (Ciba Specialty), fillers that would alter the rheological properties of the primer, such as carbon black, talc, mica, aluminum oxide, calcium carbonate, and/or optionally molecular sieves for minimizing the moisture content of the primer. The additives are typically added in an amount needed to provide the desired effect of the additive.

The primer composition typically contains from about 0.5 to about 75 weight percent hydroxyl functional polymer and preferably from about 1 to about 15 weight percent hydroxyl functional polymer. The primer composition contains from about 1 to about 99 weight percent water or solvent and preferably about 80 to about 99 weight percent water or solvent. The primer composition may also contain from about 0 to about 25 weight percent additives and preferably from about 0 to about 10 weight percent additives.

The primer of the invention may be used to prime a substrate for use with any one-component or two-component adhesive by applying at least one coat of the primer to the substrate prior to the application of the adhesive. The primer compositions of the invention are especially useful in conjunction with urethane adhesive, particularly moisture-curing urethane adhesives, also called reactive hot melt urethane adhesives. These adhesives consist primarily of isocyanate terminated polyurethane prepolymers that react with surface or ambient moisture in order to chain-extend, forming a new polyurethane polymer. Polyurethane prepolymers are conventionally obtained by reacting diols with diisocyanates. Pure diols are favored for use, instead of polyols with higher functionality, to avoid excessive branching that can lead to poor pot stability. Methylene bisphenyl diisocyanate (MDI) is favored over lower molecular weight isocyanates to minimize volatility. Cure is obtained through the diffusion of moisture from the atmosphere or the substrates into the adhesive, and subsequent reaction. The reaction of moisture with residual isocyanate forms carbamic acid. This acid is unstable, decomposing into an amine and carbon dioxide. The amine reacts rapidly with isocyanate to form a urea. The final adhesive product is a crosslinked material held together primarily through urea groups and urethane groups.

The primer composition is preferably, although not necessarily, a homogeneous solution. The various ingredients of primer composition may be combined by dissolving the functional polymer resin the solvent and then mixing the remaining ingredients therein, although other sequences may also be employed. The compositions may be applied to a substrate using a variety of techniques, including dipping, dripping, spraying, brushing, rotogravure coating, and Meir rod and knife coating. The primer is typically dried before the adhesive is applied.

To utilize the primer composition of the invention, the primer is first placed by any desired technique on at least a portion of one or both of the surfaces desired to be bonded together. Preferably, at least one of these surfaces comprises a polymer composite. The second surface may also be a polymer composite or it may be a different material, such as glass. Before application of the primer, the surfaces may be cleaned or treated in any desired manner. The primer is then allowed to dry. Following the drying of the primer, an adhesive is applied to at least a portion of the primer. While various known adhesives may be utilized, it is preferred that reactive hot melt polyurethane adhesives are utilized. The portions of the materials desired to be affixed together are then placed in contact and the adhesive is allowed to set and cure.

The primer compositions of the present invention may be better understood by reference to the following, non-limiting, examples.
Example 1. Two kinds of SMC substrates utilized In compressed hurricane door assemblies were cut in 1" x 4" coupons. Substrate A is tan in color and has lower surface smoothness than substrate B which is white. All coupons were dried under air pressure to remove extra dust from their surfaces, however no further cleaning was conducted. Glass coupons of the size 1" x 4" were cut and used without any treatment. Two separate primer compositions were formulated. The first, "Primer 1", comprises about 10% by weight polyvinyl butyral, commercially available as Pioloform from Wacker Chemicals, in ethanol. The second, "Primer 2", comprises an about 10% by weight mixture of polyvinyl butyral and hydroxyl functional polyvinyl chloride, commercially available as Vinnol from Wacker, in MEK. A bond was made by applying the primer solution onto the surface of substrates A and B, drying them thoroughly, applying adhesive onto the primer surface and bonding the SMC together. The samples were then fully cured at 75 °F, 50% relative humidity for 14 days. After the curing, the samples were subjected to a lap shear test that follows ASTM method C 961 and impact test that consisted of striking one of the SMC substrates with a missile at a location approximately six inches from the bond with the other substrate. The results of these tests are illustrated in Tables 1 and 2.

**Table 1.**

| Lap Shear Test Results | | | | |
|---|---|---|---|---|
| Adhesive | Substrate A | | Substrate B | |
| | Lap Shear Strength (psi) | Failure Mode | Lap Shear Strength (psi) | Failure Mode |
| Silicone 795 | 64 (±30.0) | 94.4%CF 5.6% AF | 60 (±18.3) | 53.3%CF 46.7%AF |
| PG 38A | 162 (±27.0) | 80%AF 20%SF | 160 (±28.3) | 80%AF 20%SF |
| PG 69A | 148 (±43.2) | 60%AF 40%SF | 148 (±29.4) | 100%AF |
| PG 38A/ Primer 1 | 207 (±30.5) | 100%SF | 289 (±63.0) | 70%SF 30%AF |
| PG 69A/ Primer 1 | 188 (±63.4) | 83.3%SF 16.7AF | 252 (±58.2) | 91.7%SF 8.3%AF |
| PG 38A/ Primer 2 | 244 (±70.0) | 100%SF | 317 (±59.4) | 84.2%SF 15.8%AF |
| PG 69A/ Primer 2 | 232 (±51.0) | 83.3%SF 16.7%AF | 284 (±42.6) | 100%SF |
| PG 38 A - PURFECT GLAZE reactive hot melt adhesive, commercially available from National Adhesives PG 69 A - PURFECT GLAZE reactive hot melt adhesive, commercially available from National Adhesives Silicone 795 - Silicone based sealant/adhesive, commercially available from Dow Coming CF = Cohesion Failure; SF = Substrate Failure; AF = Adhesive Failure | | | | |

As shown in Table 1, the bonds utilizing a primer composition produced substantially higher lap shear strength than the bonds without a primer. Further, the bonds utilizing a primer produced a more favorable failure mode, i.e., higher substrate failure and lower adhesive failure. When used without a primer, the bonds made with PURFECT GLAZE adhesive were inferior to the bonds made with Silicone 795 in failure mode. As the primer is applied before PURFECT GLAZE adhesive, the bonds performed much better than the bonds with Silicone 795, both in bond strength and failure mode. It is also noticeable that because substrate B is smoother, it was more difficult for Silicone 795 to adhere to. However, primers evened out the surface differences between substrates A and B, resulting in similar adhesion performance of the PURFECT GLAZE adhesives to both substrates. This also indicates that primer generally solves adhesion issues for difficult to bond polymer composites.
Example 2. The impact resistance of SMC bonds and SMC/glass bonds was tested by adhering substrates A and B with themselves and with glass via the method of Example 1. The resulting structures were mounted so that the bond area was free of any support and then struck with a missile at a point adjacent to the bond. The results of the impact test are shown in Table 2.

**Table 2.**

| Impact Test Results | | | | |
|---|---|---|---|---|
| Adhesive | Substrate B | Substrate B/ Glass | Substrate A | Substrate A/ Glass |
| Silicone 795 | 100%SF | 90%SF | 100%SF | 70%SF |
| | | 10%AF | | 30%AF |
| PG 938A/ Primer 1 | 100%SF | 80%SF | 100%SF | 80%SF |
| | | 20%AF | | 20%AF |
| PG 169A/ Primer 1 | 100%SF | 50%SF | 100%SF | 60%SF |
| | | 50%AF | | 40%AF |
| PG938A/ Primer 2 | 100%SF | 100%SF | 100%SF | 90%SF |
| | | | | 10%AF |
| PG 938A/ Primer 2 | 100%SF | 100%SF | 100%SF | 90%SF |
| | | | | 10%AF |

As shown in Table 2, the failure rate of the SMC/glass bonds made with primer 2 was better than that using only Silicone 795.
Example 3. FRP window frames were powder painted to improve the surface appearance, which increased the surface smoothness and lowered the surface tension to 32 dyne. Primer 2 was tested on these painted FRP testing pieces cut Into 3 inch in length. After applying primers onto the FRP surface, a ¼" bead of a polyurethane sealant was applied on top of the primer followed by joining two FRP pieces together. The unit was allowed to cure at 75°F 50% RH for 3 days and then subjected to tensile test. Table 3 summarized the test results of this primer treatment compared with other surface treatments.

**Table 3.**

| Surface treatment comparison using PG 937A sealant | | | | | | |
|---|---|---|---|---|---|---|
| Frame | Tensile Strength (psi) | | | | | |
| | Control | Primer 2 | Corona Treatment | Comm. Activator | Comm Primer | Sanded |
| 1 | 83 | 245 | 110 | 255 | 19 | 69 |
| 2 | 114 | 230 | 185 | 130 | 30 | 91 |
| 3 | 62 | 235' | 190 | 240 | 29 | 61 |
| 4 | 44 | 230 | 190 | 270 | 30 | 48 |
| 5 | 90 | 265 | | 300 | 35 | 110 |
| Failure | 100% | 100% | 3%-SF | 44%-AF | 100% | 60%-AF |
| Mode | AF | SF | 97%-AF | 36%-PF | AF | 40%SF |
| | | | | 20%-SF | | |
| Avg. | 78.6 | 241.0 | 168.8 | 239.0 | 28.6 | 75.8 |
| Standard Dev. | 26.8 | 14.7 | 39.2 | 64.8 | 5.9 | 24.7 |
| PG 937A, a polyurethane hot melt sealant available from National Starch & Chemicals. | | | | | | |
| PF = Paint Failure | | | | | | |

As Table 2 shows, primer 2 gave the best adhesion promotion among various surface treatment methods, including surfaces that were subjected to the corona treatment, sanding or coated with a commercially available primer. Primer 2 surpassed the performance of the commercial surface activator by giving more consistent failure mode. The test also showed that primer 2 could be used to overcome lowered surface tension and higher surface smoothness to give satisfactory adhesion.

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

## Claims

1. A primer composition for use with polymer composite materials comprising at least one functional polymer.

2. The primer of claim 1, wherein the functional polymer has an active hydrogen.

3. The primer of claim 2, wherein the functional polymer has hydroxyl, carboxyl, amine or multi-functionality.

4. The primer of claim 1, wherein the functional polymer is a hydroxyl functional polymer.

5. The primer of claim 4, wherein the hydroxyl functional polymer is linear or branched, has a molecular weight of more than 1000 and Tg less than 180°C.

6. The primer of claim 5, wherein the hydroxyl functional polymer is selected from the group consisting of polyvinyl butyral, functional polyvinyl chloride, functional acrylics, hydroxyl terminated polyurethane prepolymer, hydroxyl terminated polyester, hydroxyl functional styrene based copolymers, polyvinyl alcohol, hydroxyl functional ethylene vinyl acetate, hydroxyl functional polybutadiene, hydroxyl functional polyisobutylene, hydroxyl functional polyether, hydroxyl functional polysiloxane, hydroxyl functional polyphenyl oxide, hydroxyl functional polycarbonate and mixtures thereof.

7. The primer of claim 6, wherein the hydroxyl functional polymer is polyvinyl butyral.

8. The primer of claim 6, wherein the hydroxyl functional polymer is functional polyvinyl chloride.

9. The primer of claim 4, wherein the primer comprises an effective amount of the hydroxyl functional polymer.

10. The primer of claim 4, wherein the at least one hydroxyl functional polymer comprises from about 0.5 weight % to about 75 weight % of the primer.

11. The primer of claim 10, wherein the at least one hydroxyl functional polymer comprises from about 5 weight % to about 15 weight % of the primer.

12. The primer of claim 1, further comprising one or more additives.

13. The primer composition of claim 1, wherein the primer is water-based.

14. The primer composition of claim 1, wherein the primer is solvent-based.

15. The primer of claim 14, wherein the solvent is selected from the group consisting of alcohols, aliphatic esters, ketones, aliphatic hydrocarbons, aromatic hydrocarbons, and halogenated aromatic, aliphatic hydrocarbons, acetone, methyl ethyl ketone, methyl isobutyl ketone, methyl amyl ketone, ethyl acetate, isopropyl acetate, ethanol, methylene chloride, chloroform, isopropyl alcohol, xylene, heptane, toluene, and mixtures thereof.

16. An article containing one or more polymer composite materials having the primer of claim 1.

17. The article of claim 16, wherein the polymer composite material is fiber reinforced plastics or sheet molding compound.

18. The article of claim 17, wherein the polymer composite material is painted.

19. The article of claim 17, wherein the polymer composite material is unpainted.

20. The article of claim 17, further comprising one or more of the group consisting of glass, wood, plastics, metals and mixtures thereof.

21. The article of claim 16, wherein the article comprises a door or window.

22. A primer composition according to claim 1 for facilitating the bonding between polymer composite material and polyurethane adhesives or sealants, wherein the primer composition comprises at least one hydroxyl functional polymer.

23. The primer composition of claim 22, wherein the polyurethane adhesive is a one-part adhesive.

24. The primer composition of claim 22, wherein the polyurethane adhesive is a two-part adhesive.

25. A method of priming a polymer composite material, comprising the steps of providing a polymer composite material and coating at least a portion of the polymer composite material with a primer composition containing at least one functional polymer.

26. The method of claim 25 wherein the at least one functional polymer is a hydroxyl functional polymer.

27. The method of claim 26, wherein the at least one hydroxyl functional polymer is selected from the group consisting of polyvinyl butyral, functional polyvinyl chloride, functional acrylics, hydroxyl terminated polyurethane prepolymer, hydroxyl terminated polyester, hydroxyl functional styrene based copolymers, polyvinyl alcohol, hydroxyl functional ethylene vinyl acetate, hydroxyl functional polybutadiene, hydroxyl functional polyisobutylene, hydroxyl functional polyether, hydroxyl functional polysiloxane, hydroxyl functional polyphenyl oxide, hydroxyl functional polycarbonate and mixtures thereof.

28. A method of bonding at least a portion of a first polymer composite material to at least a portion of a second polymer composite material comprising the steps of coating at least a portion of one or both of the first and second polymer composite materials with a primer composition containing at least one functional polymer, drying the primer composition, applying an adhesive to the primer composition and joining the first and second polymer composite materials.

29. The method of claim 28, wherein the at least one functional polymer is a hydroxyl functional polymer.

30. The method of claim 28, wherein the adhesive is a polyurethane adhesive.

31. A method of bonding at least a portion of a polymer composite material to at least a portion of a section of glass comprising the steps of coating at least a portion of the polymer composite material with a primer composition containing at least one functional polymer, drying the primer composition, applying an adhesive to the primer composition and joining the polymer composite material and the glass.

32. The method of claim 31, wherein the at least one functional polymer is a hydroxyl functional polymer.

33. The method of claim 31, wherein the adhesive is a polyurethane adhesive.
